# EUROPEAN PATENT SPECIFICATION

(11) **EP 1 088 412 B1**
(45) Date of publication and mention of the grant of the patent: **26.12.2007**
(21) Application number: 99931706.8
(22) Date of filing: 15.06.1999
(51) Int. Cl.: H04J 3/06

(54) **FRAME SYNCHRONIZATION TECHNIQUES AND SYSTEMS**
RAHMENSYNCHRONISIERUNGSVERFAHREN UND -EINRICHTUNGEN
TECHNIQUES ET SYSTEMES DE SYNCHRONISATION DE TRAMES

(30) Priority: 19.06.1998 US 100233
(43) Date of publication of application: 04.04.2001
(73) Proprietor: TELEFONAKTIEBOLAGET LM ERICSSON (publ), 164 83 Stockholm (SE)
(72) Inventor: JAENECKE, Fredrik, 227 36 Lund (SE); ÖSTBERG, Christer, S-245 55 Staffanstorp (SE)
(74) Representative: O'Connell, David Christopher
(86) International application number: PCT/SE1999/001068
(87) International publication number: WO 1999/066661

(56) References cited:
- EP-A- 0 269 974
- EP-A- 0 809 378
- US-A- 3 940 563
- PATENT ABSTRACTS OF JAPAN vol. 009, no. 225 (E-342), 11 September 1985 (1985-09-11) & JP 60 081940 A (NIPPON DENKI KK), 10 May 1985 (1985-05-10)
- PATENT ABSTRACTS OF JAPAN vol. 014, no. 200 (E-0920), 24 April 1990 (1990-04-24) & JP 02 043837 A (MITSUBISHI ELECTRIC CORP), 14 February 1990 (1990-02-14)
- PATENT ABSTRACTS OF JAPAN vol. 014, no. 016 (E-872), 12 January 1989 (1989-01-12) & JP 01 258515 A (HITACHI LTD), 16 October 1989 (1989-10-16)
- PATENT ABSTRACTS OF JAPAN vol. 017, no. 317 (E-1382), 16 June 1993 (1993-06-16) & JP 05 030062 A (TOSHIBA CORP), 5 February 1993 (1993-02-05)

## Description

### BACKGROUND

The present invention relates to digital radio systems, and more specifically, to performing synchronization as part of the processing of a received signal in a spread spectrum radiocommunication system.

Radiocommunication systems involve the transmission of information over an air interface, for example by modulating a carrier frequency with that information. Upon reception, a receiver attempts to accurately extract the information from the received signal by performing an appropriate demodulation technique. However, in order to demodulate a received signal, it is first necessary to synchronize timing between the transmitter and the receiver. Different levels of synchronization may be required depending upon the design of the radiocommunication system. For example, in most systems clocking differences between the transmitter and the receiver create differences in timing at a bit level. Moreover, in some radiocommunication systems, information is transmitted in bursts, sometimes referred to as "frames", which represent chunks of information that are independently detected and decoded. In these types of systems it is also desirable to locate the beginning of a frame, so that information relevant to a particular receiver is isolated and demodulated. Likewise, some systems (e.g., time division multiple access or TDMA systems) further subdivide frames into timeslots to create channels that are time multiplexed with one another. In these systems it is further desirable to synchronize the receiver to the beginning of each timeslot.

Some systems provide channelization using a spread spectrum technique known as code division multiple access (CDMA). In CDMA systems, the information data stream to be transmitted is first coded or spread using a unique spreading code and then combined with a long PN-sequence or a shorter scrambling-sequence. In the latter case, the scrambling-sequences are planned from cell to cell so that neighboring cells use different scrambling-sequences or scrambline-masks. The information data stream and the PN-sequence or the scrambling sequence can have the same or different bit rates. The multiplication of the information data stream with the unique spreading code and long PN-sequence results in an output stream of chips. Thus, in CDMA systems, it is also desirable to synchronize the receiver to the chip boundaries.

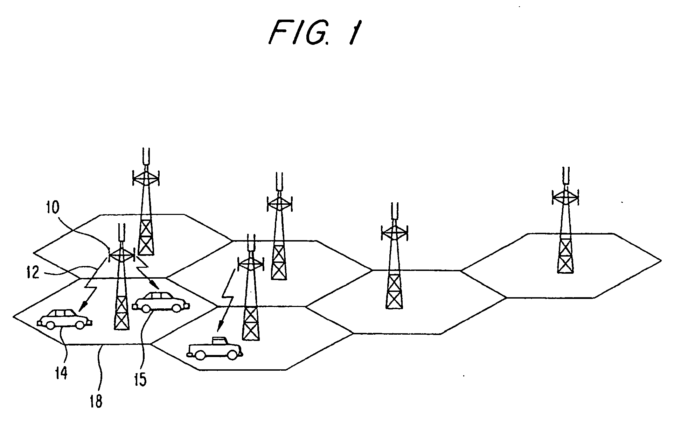

To further understand the synchronization tasks associated with signal processing in a CDMA radiocommunication system, consider the following example. FIG. 1 illustrates the use of base stations to transmit radio waves to mobile users (mobile stations) in a cellular system. In a CDMA system, base station 10 can transmit signals to mobile stations 14 and 15 as a single (composite) signal. The signal directed to mobile station 14 is typically coded with a short code that is orthogonal or mostly orthogonal to a short code that is used to code the signal directed to mobile station 15. These signals are then spread with a second code that is sometimes referred to as a long code, associated with base station 10. The sum of the two coded and spread signals is then transmitted by base station 10.

When mobile station 14 receives the composite signal, mobile station 14 multiplies the spread signal with the long code and the short code to recreate the signal directed to mobile station 14 and the signal directed to mobile station 15 is suppressed as interference noise. Similarly, mobile station 15 multiplies the spread signal with the long code and the short code assigned to mobile station 15 to recreate the signal directed to mobile station 15 and the signal directed to mobile station 14 is suppressed as interference noise. The receivers associated with mobile stations 14 and 15 must have acquired the various levels of synchronization to the received signal which were described above, in addition to learning or knowing the applicable long and short codes, in order to implement despreading, demodulation and decoding of the information residing in that signal.

Many different techniques have been developed in order to acquire synchronization at each of the various levels. For frame synchronization these techniques typically depend, in large degree, on the frame structure and the manner in which overhead or control information is conveyed to the mobile station. Overhead information is usually provided on one or more broadcast control channels which are transmitted by base stations using known channels to which mobile stations can quickly lock onto and receive the overhead information including, among other things, information used to acquire frame synchronization with that base station. Those skilled in the art will appreciate that many radiocommunciation systems have unsynchronized base stations, i.e., base station which do not share a common timing reference signal. Accordingly, frame Synchronization is a process which needs to be performed, for example, at start-up (i.e., when a mobile is powered on), as a mobile station moves from cell to cell and when measuring on channels associated with neighbouring cells as part of cell reselection procedures (e.g., to confirm that a mobile station is listening to a "best" serving base station).

Of course, as with most signal processing tasks performed by the receiver, reducing the delay associated with synchronization is important in improving the receiver's performance. Many types of communication services, in particular speech communication, are relatively delay intolerant. Thus, system designers are continuously seeking for ways in which to reduce the amount of time that it takes to perform any given signal processing tasks, including frame synchronization.

EP 0269974 discloses a known system for fast detection for a predetermined pattern of bits embedded in a serial bit stream. US 3,940,563 discloses a method for a carrier system having a serial digital data bit stream, which involves searching for a terminal frame code within the bit stream.

### SUMMARY

The present invention relations to synchronization of digital radio signals which improves the speed of frame synchronization by reducing the number of bits or symbols which need to be evaluated in order to determine the phase of a particular frame. According to exemplary embodiments of the present invention, a broadcast control channel includes a synchronization bit or symbol in each of a plurality of time slots. The sequential nature of these bits or symbols can be used by the receiver to determine the current phase of the frame as it is being transmitted by a particular base station.

According to a first aspect of the present invention, a method is provided for time synchronizing frames associated with information transmitted by a radiocommunication system comprising the steps for each of the frames, of: the system providing a sequence having a first number of synchronization symbols which are interspersed among other information bits within said frame; a receiver receiving a second number of said synchronization symbols beginning at an arbitrary position within said sequence; and the receive identifying a boundary of said frame using said second number of said synchronization symbols, characterized by said second number of synchronization symbols being varied by the receiver from at least one of the frames to the following frame and being different from the first member for at least one of the frames.

According to another aspect of the present invention, there is provided a mobile station comprising: a receiver for receiving, from a transmission source, frames with each a plurality of frame synchronization symbols associated with a cyclically repeated frame synchronization sequence; and a processor for evaluating, for each of the frames, said plurality of frame synchronization symbols to frame synchronize to said transmission source, wherein for each of the frames, said plurality of frame synchronization symbols are a subset of a number of frame synchronization symbols in said repeated frame synchronization sequence and characterized by the receiver and processor being such that said plurality of frame synchronization symbols can vary in number from one of the frames to the following frame.

More specially, the sequence of synchronization bits or symbols according to the present invention is such that the mobile station can determine the phase of the received frame by reading a subset of the total number of bits or symbols in the sequence. In a purely illustrative embodiment, each frame consists of sixteen timeslots such that the synchronization sequence includes sixteen bits. However, any four consecutive bits in the sequence can uniquely identify the phase of the frame. Thus, mobile stations need only read synchronization bits from four timeslots, rather than an entire sequence of sixteen bits, to acquire frame synchronization, which significantly increases synchronization speed.

### BRIEF DESCRIPTION OF THE DRAWINGS

The present invention will now be described with reference to the accompanying drawings in which:
Figure 1 illustrates a cellular radiocommunication system;
Figure 2 depicts an exemplary physical and logical channel structure in which the present invention can be implemented;
Figure 3 is an exemplary transmitter and receiver structure which can be used to implement the present invention;
Figure 4 is a table which illustrates exemplary subsets of synchronization sequences which can be used to perform frame synchronization according to an exemplary embodiment of the present invention; and
Figure 5 is another table which illustrates exemplary subsets of synchronization sequences which can be used to perform frame synchronization according to a different exemplary embodiment of the present invention

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

The exemplary radio communication systems discussed herein are described as using a hybrid TDMA/CDMA methodology, in which communication between the base station and the mobile terminals is performed using spreading codes, but wherein information is also conveyed in discrete time slots. However, those skilled in the art will appreciate that the concepts disclosed herein find use in other methodologies, including, but not limited to, frequency division multiple access (FDMA), TDMA, CDMA or any other access methodology. Likewise, some of the exemplary embodiments provide illustrative examples relating to an exemplary frame and logical channel structure which is under consideration for certain third generation radiocommunication systems, however, the techniques described herein are equally applicable to equipment used in any system.

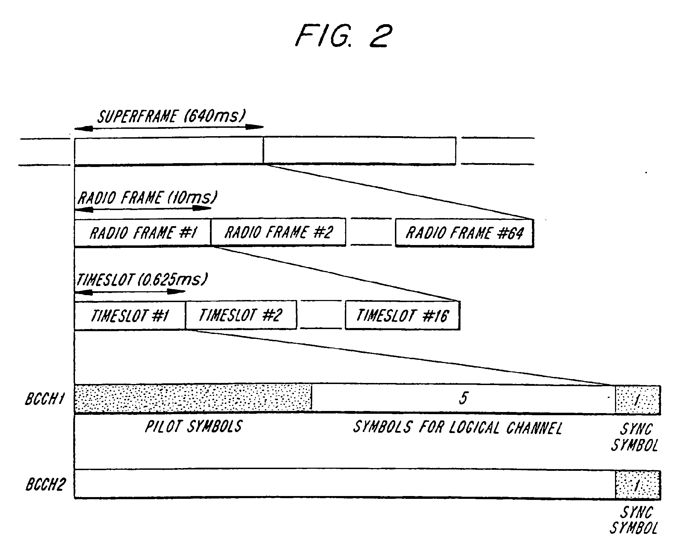

When the first frame of a desired information signal is received by a receiver, in most communication systems, the clock at the transmitter and the clock at the receiver are not "locked", i.e. they are not synchronized in time. One part of this locking procedure is commonly referred to as frame synchronization. For the purposes of illustration, and not limitation, consider the exemplary frame and logical channel format depicted in Figure 2. Therein sixty-four radio frames of 10ms each make up a superframe. Within each radio frame there are sixteen timeslots. Each time slot includes various types and fields of information, depending upon the channel to which it corresponds. In Figure 2, two such channels, BCCH1 and BCCH2, are depicted. These two channels are broadcast control channels transmitted by the base station to all of the mobile stations in the area serviced by that base station, e.g., using different short codes known *a priori* by the mobiles. As can be seen in the figure, each control channel includes one synchronization symbol (or bit) per timeslot. The synchronization symbol (or bit) in BCCH2 can be used for frame synchronization as described below. BCCH 1 also carries pilot symbols which can be used by a receiver, for example, to perform channel estimation, and a logical information channel which can carry varying types of overhead information, e.g., identifying a network operator, sector, etc.

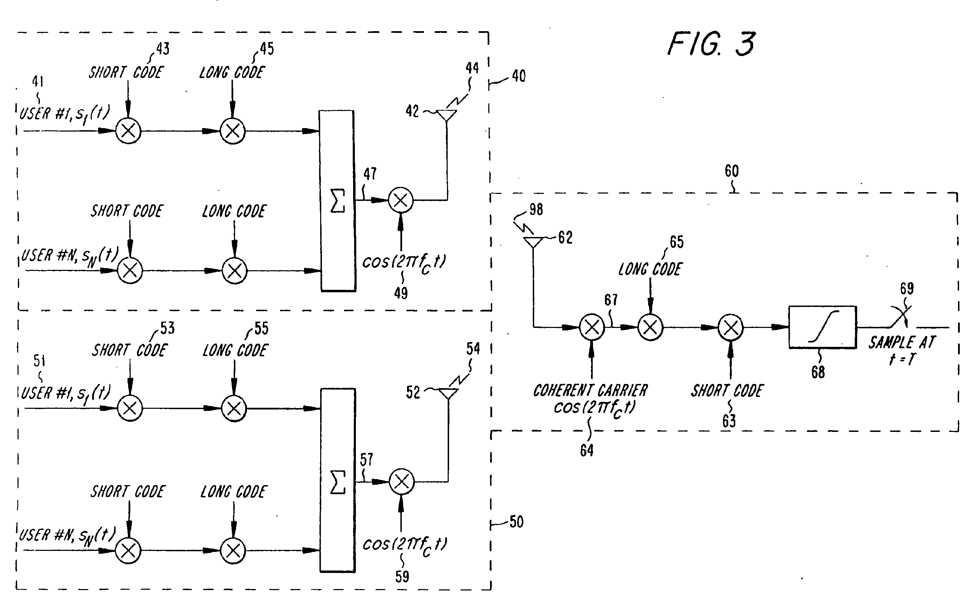

Figure 3 is a block diagram which depicts some of the transmission and reception components which can he used to communicate information over the air interface using the frame and logical channel structure illustrated in Figure 2. Therein, two sources 40 and 50, e.g,. supported by different transmitters in a single base station, transmit different signals over the same frequency spectrum using spread spectrum techniques. The input data associated with each source are multiplied by an orthogonal short code and spread by an additional long code. The sum of the coded and spread user data is then transmitted using a radio frequency carrier and a transmitting antenna. For example, in Figure 3, user input data 41 is multiplied by an orthogonal short code 43 and spread using a long code 45. The sum of the coded and spread user data 47 is used to modulate a radio frequency carrier 49 which is transmitted by transmitting antenna 42. Similarly, user input data 51 is multiplied by an orthogonal short code 53 and spread using a long code 55. The sum of the coded and spread user data 57 is used to modulate a radio frequency carrier 59 which is transmitted by transmitting antenna 52. Transmitting antenna 42 transmits signal 44 and transmitting antenna 52 transmits signal 54.

Receiver 60 has a receiving antenna 62. Signals 44 and 54 experience channel effects by virtue of having been transmitted over an air interface, e.g., reflections of signals 44 and 54 that travel along different paths of varying lengths. The interactions between these reflections cause multipath fading whose effects will vary depending upon the specific location of the mobile station at any given time, and the strengths of these signals decrease as the distance between the source and the receiver increases. Receiver 60 can use a RAKE receiver (which is well known to those skilled in the art) to collect the signal energy from different signal paths. When receiver 60 receives signal 98, receiver 60 demodulates the signal using carrier signal 64 to provide composite signal 67. Composite signal 67 is despread using synchronized long code 65 and decoded using synchronized orthogonal code 63. Receiver 60 can use an integrator 68 and a sampler 69 to recreate the transmitted user data.

In addition to processing signals received on its assigned traffic channel, i.e. using a unique short code, a mobile station also has other signal processing tasks. For example, when powered on and idle, the mobile station will listen to a broadcast control channel for various information, e.g., paging messages. Periodically, the mobile station is instructed to measure the quality, e.g., signal strength, of the broadcast control channel to which it is listening as well as the quality of control channels broadcast by other neighboring cells, so that the system can ensure that the idle mobile station is listening to an appropriate control channel. In the process of monitoring the quality of broadcast control channels transmitted by neighboring base stations, the mobile station must also synchronize thereto.

In order to accomplish the signal processing tasks associated with start-up, moving between cells and cell reselection, the receiver 60 must be able to time synchronize to the frame structure of transmissions from various, unsynchronized base stations. According to one technique, the mobile station first acquires timeslot (or primary) synchronization, followed by frame synchronization and then long code identification. Timeslot synchronization can be performed using the synchronization information found in the first broadcast control channel BCCH1. The long code identification process can be performed by determining a code used to modulate information on one or both broadcast control channels, this code can then be used to identify a specific long code used by the base station that is transmitting on these channels. Since these portions of the synchronization process are not the focus of the present invention, they will not be further described here.

Frame synchronization, on the other hand, is performed using the synchronization symbol or bit found in BCCH2 according to this exemplary embodiment of the present invention. More precisely, the synchronization symbol or bit is transmitted by the base station in each timeslot according to a predetermined, cyclical pattern which can be used by the mobile station to determine the location of the frame boundary for the base station to which it is currently listening. The synchronization sequence is typically one which is selected to have good autocorrelation properties, e.g, maximal length sequences. One exemplary sequence which has been previously proposed for use as the synchronization sequence and will be used here to better explain the present invention is:
1, 1, 1, 0, 0, 0. 0, 1, 0, 1. 0, 0, 1, 1, 0, 1,
although those skilled in the art will appreciate that the present invention can be implemented using any sequence of bits, or for that matter any sequence of symbols regardless of whether the symbols are represented using a binary alphabet (including any shift of this sequence) or an M-ary alphabet. For this sequence, however, the base station would thus transmit a '1' as the synchronization bit in timeslot #1 of BCCH2, a '1' as the synchronization bit in timeslot #2,... and a '1' as the synchronization bit in timeslot #16.

Since the pattern is predetermined and cyclical, the mobile station needs to identify the time shift between order in which time slots have been received and the beginning of a frame in order to achieve frame synchronization. This can be achieved in a straightforward manner by determining how many shifts are required to match the sequence of sixteen symbols received by a mobile station with the predetermined, cyclical sequence that is being repeated by the base station. For example, suppose that a mobile station received and decoded sixteen consecutive timeslots of BCCH2 transmitted by a particular mobile station and identified a pattern of :
1, 0, 1, 0, 0, 0, 1, 1, 0, 1, 1, 1, 1, 0, 0, 0, 0
as received synchronization bits. By shifting this pattern 7 places to the right (or 9 places to the left), the received pattern will match the predetermined pattern, thus providing the mobile station with the location of the frame boundary.

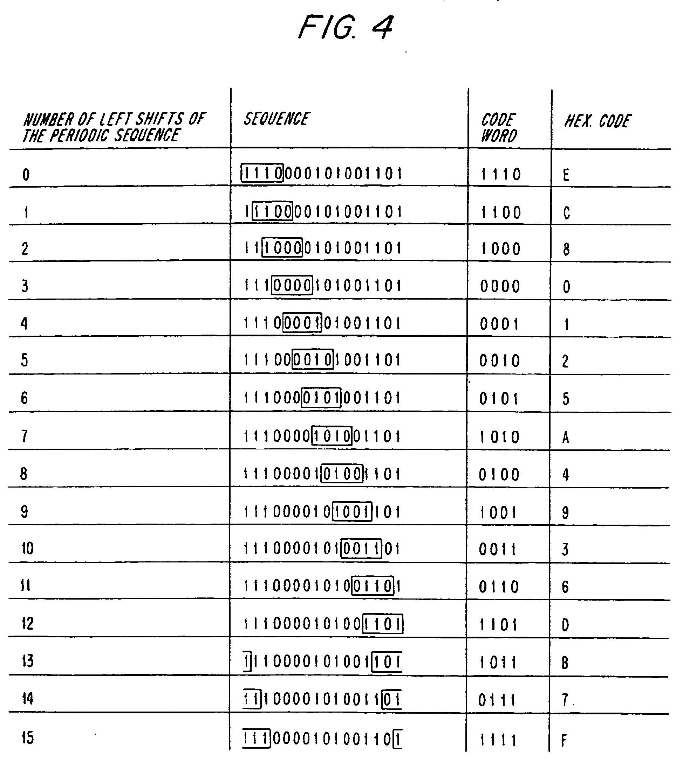

However, Applicants have recognized that this frame synchronization process can be performed more rapidly by taking advantage of certain characteristics of the predetermined, cyclical sequences which are used for frame synchronization. For example, within the sixteen bit pattern described above are sixteen unique, four bit code words as seen in Figure 4. Therein, each code word is shown by a box as it appears within the predetermined, cyclical sequence, as well as independently in binary and hexadecimal notation. It can be seen from this figure that by correctly reading any four consecutive synchronization bits in the sixteen bit sequence, a mobile station can correctly identify how many shifts are needed to reach the beginning of the sequence and, hence, the location of the frame boundary. Thus, instead of reading sixteen consecutive timeslots to acquire trame synchronization, the present invention reduces the time associated with this aspect of signal processing in receivers by up to a factor of four for this particular system design.

This specific system design should not be construed to limit the scope of the present invention, however, which may be more generally characterized as identifying and reading a subset of a sequence of synchronization bits or symbols which uniquely identify a phase of frame to achieve frame synchronization. Moreover, while the previous exemplary embodiment describes the present invention in the context of the minimum number of timeslots whose synchronization bits can be used to unambiguously identify frame phase, those skilled in the art will also appreciate that it may be desirable to select a subset of the synchronization sequence which is larger than this minimum number to determine frame synchronization. Using additional symbols or bits will increase the probability that a correct frame synchronization is selected to reduce the effect of erroneously decoded bits in the broadcast control channel.

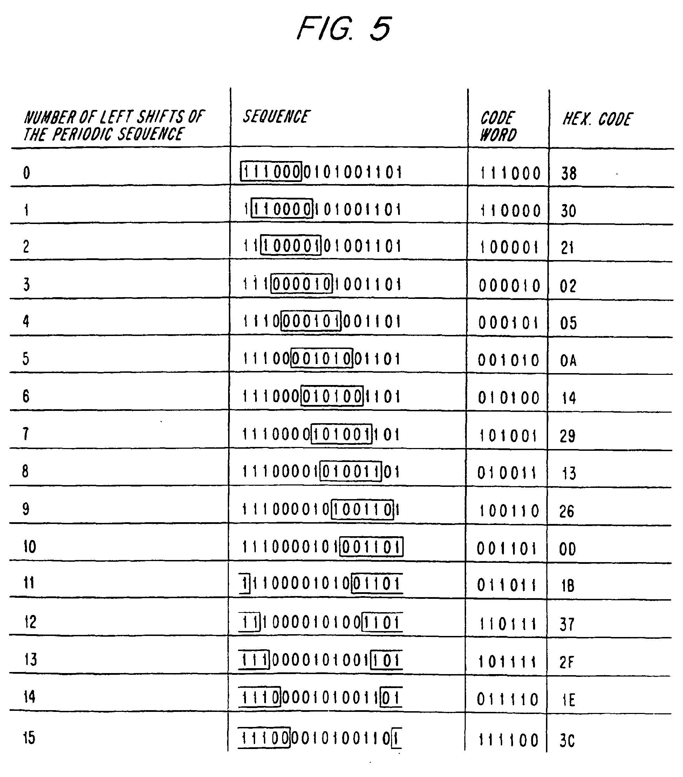

For example, by evaluating the five synchronization symbols or bits from five consecutive timeslots, the mobile station can effectively identify two, four bit, unique subsets of the synchronization sequence, which doubles the probability that the frame boundary is correctly located. Similarly, using six consecutive bits provides three times as much certainty (which case is illustrated in Figure 5), seven bits provides four times the certainty, etc. In all of these cases processing speed is still increased since less than all of the available bits in the sequence are being evaluated.

Thus, it will be appreciated that the present invention can be employed in varying and adaptive forms based on a tradeoff between speed and certainty to use some fixed or adaptively determined subset of the available synchronization information that unambiguously identifies the phase of the frame. For example, of *L* available bits some fixed subset having *m* bits can be used where *m < L* and *m* is sufficient to uniquely identify the phase of the frame if the *m* bits are correctly decoded. Alternatively, the mobile station can adapt the number of bits being used to *m*+*1, m+2*, etc. if one of the first *m* bits is not correctly decoded. In this adaptive embodiment of the present invention, it is possible that *m* might reach or exceed *L* for particularly noisy or high interference level channels.

As a third alternative, since the certainty of decoding the synchronization bits may be attributable to various measurable and changing parameters, e.g., those associated with received signal quality, it may further be desirable to adapt the minimum number of timeslots, i.e., synchronization bits, which are evaluated by the receiver in the frame synchronization process. For example, if information is available regarding the likelihood of any particular symbol hypothesis being correct, such metrics can be used to determine if the receiver should increase or decrease the minimum number of timeslots that it will evaluate when it next has to perform frame synchronization routine, e.g., when it is ordered to measure on channels transmitted by neighboring cells.

## Claims

1. A method for time synchronizing to frames associated with information transmitted by a radiocommunication system comprising the steps, for each of the frames, of:
the system providing a sequence having a first number of synchronization symbols which are interspersed among other information bits within said frame;
a receiver receiving a second number of said synchronization symbols beginning at an arbitrary position within said sequence; and
the receiver identifying a boundary of said frame using said second number of said synchronization symbols,
**characterized by** said second number of synchronization symbols being varied by the receiver from at least one of the frames to the following frame and being different from the first number for at least one of the frames.

2. The method of claim 1, further co prising the step of:
transmitting said information using time division multiple access techniques.

3. The method of claim 1, further comprising the step of:
transmitting said information using code division multiple access techniques.

4. The method of claim 1, wherein the frames include a plurality of timeslots associated with each frame, and wherein each timeslot includes one of said first number of synchronization symbols.

5. The method of claim 1, wherein each of said synchronization symbols is a single bit.

6. The method of claim 1, wherein each of said synchronization symbols is represented using at least one M-ary digit.

7. The method of claim 4, wherein said plurality of timeslots is sixteen timeslots and said first number of synchronization symbols is a bit sequence 1,1,1,0,0,0,0,1,0,1,0,0,1,1,0,1 or any shift thereof.

8. The method of claim 7, wherein said second number of synchronization symbols is four.

9. The method of claim 7, wherein said second number of synchronization symbols is six.

10. The method of claim 1, further comprising the step of:
increasing said second number of said synchronization symbols from a first one of the frames to the following frame if one or more of said second number of synchronization symbols is decoded incorrectly in the first frame.

11. The method of claim 1, further comprising the steps of:
adaptively selecting said second number of synchronization symbols from one of the frame to a following frame based upon at least one of a desired probability of correctly determining said boundary and a quality of a radio channel over which said information is transmitted.

12. A mobile station comprising:
a receiver (60) for receiving, from a transmission source, frames with each a plurality of frame synchronization symbols associated with a cyclically repeated frame synchronization sequence; and
a processor for evaluating, for each of the frames, said plurality of frame synchronization symbols to frame synchronize to said transmission source,
wherein, for each of the frames, said plurality of frame synchronization symbols are a subset of a number of frame synchronization symbols in said repeated frame synchronization sequence and **characterized by** the receiver and processor being such that said plurality of frame synchronization symbols can vary in number from one of the frames to the following frame.

13. The mobile station of claim 12 for receiving, from said transmission source, information using time division multiple access.

14. The mobile station of claim 12 for receiving, from said transmission source, information using code division multiple access.

15. The mobile station of claim 12, wherein the frames used by said transmission source include a plurality of timeslots associated with each frame, and wherein each timeslot includes one of said synchronization symbols in said repeated frame synchronisation sequence.

16. The mobile station of claim 12, wherein each of said synchronization symbols is a single bit.

17. The mobile station of claim 12, wherein each of said synchronization symbols is represented using at least one M-ary digit.

18. The mobile station of claim 15, wherein said plurality of timeslots is sixteen timeslots and said synchronization symbols in said repeated sequence is a bit sequence 1,1,1,0,0,0,0,1,0,1,0,0,1,1,0,1 or any shift thereof.

19. The mobile station of claim 18, wherein said plurality of synchronization symbols is four.

20. The mobile station of claim 18, wherein said plurality of synchronization symbols is six.

## Patentansprüche

1. Ein Verfahren zum Zeitsynchronisieren von Rahmen, die mit Informationen verknüpft sind, die von einem Funkkommunikationssystem übertragen werden, umfassend die Schritte für jeden der Rahmen:
Bereitstellen durch das System einer Sequenz, die eine erste Anzahl von Synchronisierungssymbolen aufweist, die unter anderen Informationsbits innerhalb des Rahmens gemischt sind;
Empfangen durch einen Empfänger einer zweiten Anzahl der Synchronisierungssymbolen, die an einer arbiträren Position innerhalb der Sequenz beginnen; und
Identifizieren durch den Empfänger einer Begrenzung des Rahmens unter Verwendung der zweiten Anzahl der Synchronisierungssymbole,
**dadurch gekennzeichnet, dass** die zweite Anzahl von Synchronisierungssymbolen variiert wird durch den Empfänger von mindestens einem der Rahmen bis zu dem folgenden Rahmen und unterschiedlich ist zu der ersten Anzahl für mindestens einen der Rahmen.

2. Das Verfahren nach Anspruch 1, ferner den Schritt umfassend:
Übertragen der Information unter Verwendung von Zeitmultiplexverfahrenstechniken.

3. Das Verfahren nach Anspruch 1, ferner den Schritt umfassend:
übertragen der Information unter Verwendung von Codemultiplexverfahrenstechniken.

4. Das Verfahren nach Anspruch 1, wobei die Rahmen eine Vielzahl von Zeitschlitzen umfassen, die mit jedem Rahmen verknüpft sind, und wobei jeder Zeitschlitz eine der ersten Anzahl von Synchronisierungssymbolen enthält.

5. Das Verfahren nach Anspruch 1, wobei jedes der Synchronisierungssymbole ein einzelnes Bit ist.

6. Das Verfahren nach Anspruch 1, wobei jedes der Synchronisierungssymbole repräsentiert wird unter Verwendung einer M-stufige Zahl.

7. Das Verfahren nach Anspruch 4, wobei die Vielzahl der Zeitschlitze sechzehn Zeitschlitze ist und die erste Anzahl der Synchronisierungssymbole eine Bitsequenz 1,1,1,0,0,0,0,1,0,1,0,0,1,1,0,1 oder irgendeine Verschiebung davon ist.

8. Das Verfahren nach Anspruch 7, wobei die zweite Anzahl von Synchronisierungssymbolen vier ist.

9. Das Verfahren nach Anspruch 7, wobei die zweite Anzahl von Synchronisierungssymbolen sechs ist.

10. Das Verfahren nach Anspruch 1, ferner den Schritt umfassend:
Erhöhen der zweiten Anzahl der Synchronisierungssymbole von einem ersten der Rahmen zu dem folgenden Rahmen, wenn eine oder mehr der zweiten Anzahl der Synchronisierungssymbole in dem ersten Rahmen nicht korrekt decodiert ist.

11. Das Verfahren nach Anspruch 1, ferner den Schritt umfassend:
adaptives Auswählen der zweiten Anzahl der Synchronisierungssymbole von einem der Rahmen zu einem folgenden Rahmen basierend auf mindestens einer gewünschten Wahrscheinlichkeit des korrekten Bestimmens der Begrenzung und einer Qualität eines Funkkanals, über die die Information übertragen wird.

12. Ein Mobilfunkendgerät, umfassend:
einen Empfänger (60) zum Empfangen, von einer Übertragungsquelle, von Rahmen mit jeweils einer Vielzahl von Rahmensynchronisierungssymbolen, die mit einer zyklisch wiederholten Rahmensynchronisierungssequenz verknüpft sind; und
einen Prozessor zum Evaluieren, für jeden der Rahmen, der Vielzahl von Rahmensynchronisierungssymbole, um mit der Übertragungsquelle zu Rahmen-Synchronisieren,
wobei für jeden der Rahmen die Vielzahl der Rahmensynchronisierungssymbole eine Untermenge einer Anzahl von Rahmensynchronisierungssymbole in der Rahmensynchronisierungssequenz sind und **dadurch gekennzeichnet, dass** der Empfänger und Prozessor so sind, dass die Vielzahl der Rahmensynchronisierungssymbole in der Anzahl variieren kann von einem der Rahmen zu dem folgenden Rahmen.

13. Das Mobilfunkendgerät nach Anspruch 12 zum Empfangen, von der Übertragungsquelle, von Information unter Verwendung von Zeitmultiplexverfahren.

14. Das Mobilfunkendgerät nach Anspruch 12 zum Empfangen, von der Übertragungsquelle, von Information unter Verwendung von Codemultiplexverfahren.

15. Das Mobilfunkendgerät nach Anspruch 12, wobei die Rahmen, die von der Übertragungsquelle verwendet werden, eine Vielzahl von Zeitschlitzen enthalten, die mit jedem Rahmen verknüpft sind, und wobei jeder Zeitschlitz eins der Synchronisierungssymbole in der wiederholten Rahmensynchronisierungssequenz enthält.

16. Das Mobilfunkendgerät nach Anspruch 12, wobei jedes der Synchronisierungssymbole ein einzelnes Bit ist.

17. Das Mobilfunkendgerät nach Anspruch 12, wobei jedes der Synchronisierungssymbole repräsentiert wird unter Verwendung einer M-stufige Zahl.

18. Das Mobilfunkendgerät nach Anspruch 15, wobei die Vielzahl der Zeitschlitze sechzehn Zeitschlitze ist und die Synchronisierungssymbole in der wiederholten Sequenz eine Bitsequenz 1,1,1,0,0,0,0,1,0,1,0,0,1,1,0,1 oder eine Verschiebung davon ist.

19. Das Mobilfunkendgerät nach Anspruch 18, wobei die Vielzahl der Synchronisierungssymbole vier ist.

20. Das Mobilfunkendgerät nach Anspruch 18, wobei die Vielzahl der Synchronisierungssymbole sechs ist.

## Revendications

1. Procédé de synchronisation temporelle de trames associées à des informations émises par un système de radiocommunication, comprenant les étapes dans lesquelles, pour chacune des trames :
le système fournit une séquence ayant un premier nombre de symboles de synchronisation qui sont intercalés parmi d'autres bits d'information dans ladite trame ;
un récepteur reçoit un second nombre desdits symboles de synchronisation, commençant à une position arbitraire dans ladite séquence ; et
le récepteur identifie une limite de ladite trame en utilisant ledit second nombre desdits symboles de synchronisation,
**caractérisé en ce que** ledit second nombre de symboles de synchronisation est modifié par le récepteur entre au moins une des trames et la trame suivante et **en ce qu'**il est différent du premier nombre pour au moins une des trames.

2. Procédé selon la revendication 1, comprenant en outre l'étape consistant à :
émettre lesdites informations en utilisant des techniques d'accès multiple à répartition dans le temps.

3. Procédé selon la revendication 1, comprenant en outre l'étape consistant à :
émettre lesdites informations en utilisant des techniques d'accès multiple à répartition par code.

4. Procédé selon la revendication 1, dans lequel les trames comprennent une pluralité d'intervalles de temps associés à chaque trame et dans lequel chaque intervalle de temps comprend un symbole parmi ledit premier nombre de symboles de synchronisation.

5. Procédé selon la revendication 1, dans lequel chacun desdits symboles de synchronisation est un bit unique.

6. Procédé selon la revendication 1, dans lequel chacun desdits symboles de synchronisation est représenté en utilisant au moins un chiffre m-aire.

7. Procédé selon la revendication 4, dans lequel ladite pluralité d'intervalles de temps est faite de seize intervalles de temps et ledit premier nombre de symboles de synchronisation est une séquence binaire 1, 1, 1, 0, 0, 0, 0, 1, 0, 1, 0, 0, 1, 1, 0, 1 ou un décalage quelconque de celle-ci.

8. Procédé selon la revendication 7, dans lequel ledit second nombre de symboles de synchronisation est de quatre.

9. Procédé selon la revendication 7, dans lequel ledit second nombre de symboles de synchronisation est de six.

10. Procédé selon la revendication 1, comprenant en outre l'étape consistant à :
augmenter ledit second nombre desdits symboles de synchronisation entre une première des trames et la trame suivante si un ou plusieurs symboles dudit second nombre de symboles de synchronisation sont décodés incorrectement dans la première trame.

11. Procédé selon la revendication 1, comprenant en outre l'étape consistant à :
sélectionner de manière adaptative ledit second nombre de symboles de synchronisation entre une des trames et la trame suivante, en fonction d'au moins un des facteurs suivants : probabilité souhaitée de décoder correctement ladite limite et qualité du canal radio sur lequel sont transmises lesdites informations.

12. Station mobile comprenant :
un récepteur (60), destiné à recevoir d'une source émettrice des trames comptant chacune une pluralité de symboles de synchronisation de trame associés à une séquence de synchronisation de trame répétée cycliquement ; et
un processeur, destiné à évaluer pour chacune des trames ladite pluralité de symboles de synchronisation de trame afin de réaliser la synchronisation de trame avec ladite source émettrice,
dans laquelle, pour chacune des trames, ladite pluralité de symboles de synchronisation de trame constitue un sous-ensemble d'un certain nombre de symboles de synchronisation de trame dans ladite séquence répétée de synchronisation de trame et
**caractérisée en ce que** le récepteur et le processeur sont tels que ladite pluralité de symboles de synchronisation de trame peut varier en nombre entre une des trames et la trame suivante.

13. Station mobile selon la revendication 12, destinée à recevoir des informations de ladite source émettrice par accès multiple à répartition dans le temps.

14. Station mobile selon la revendication 12, destinée à recevoir des informations de ladite source émettrice par accès multiple à répartition par code.

15. Station mobile selon la revendication 12, dans laquelle les trames utilisées par ladite source émettrice comprennent une pluralité d'intervalles de temps associés à chaque trame et dans laquelle chaque intervalle de temps comprend un desdits symboles de synchronisation de ladite séquence répétée de synchronisation de trame.

16. Station mobile selon la revendication 12, dans laquelle chacun desdits symboles de synchronisation est un bit unique.

17. Station mobile selon la revendication 12, dans laquelle chacun desdits symboles de synchronisation est représenté en utilisant au moins un chiffre m-aire.

18. Station mobile selon la revendication 15, dans laquelle ladite pluralité d'intervalles de temps est faite de seize intervalles de temps et lesdits symboles de synchronisation dans ladite séquence répétée forment une séquence binaire 1, 1, 1, 0, 0, 0, 0, 1, 0, 1, 0, 0, 1, 1, 0, 1 ou un décalage quelconque de celle-ci.

19. Station mobile selon la revendication 18, dans laquelle ladite pluralité de symboles de synchronisation est de quatre.

20. Station mobile selon la revendication 18, dans laquelle ladite pluralité de symboles de synchronisation est de six.
